(19) **Europäisches Patentamt**
**European Patent Office**
**Office européen des brevets**

(11) **EP 4 118 244 B1**

(12) **EUROPEAN PATENT SPECIFICATION**

(45) Date of publication and mention
of the grant of the patent:
**16.10.2024 Bulletin 2024/42**

(51) International Patent Classification (IPC):
**C21B 13/00** (2006.01)    **C21B 13/02** (2006.01)
**C25B 1/04** (2021.01)    **C25B 1/23** (2021.01)
**C25B 15/08** (2006.01)    **C21B 5/06** (2006.01)

(21) Application number: **21712262.1**

(52) Cooperative Patent Classification (CPC):
**C21B 13/0073; C21B 5/06; C21B 13/004;**
**C21B 13/02; C25B 1/04; C25B 1/23; C25B 15/081;**
C21B 2100/22; C21B 2100/24; C21B 2100/282;
C21C 2100/02; C21C 2100/04; Y02E 60/32;
Y02E 60/36; Y02P 10/122;        (Cont.)

(22) Date of filing: **03.03.2021**

(86) International application number:
**PCT/SE2021/050187**

(87) International publication number:
**WO 2021/183022 (16.09.2021 Gazette 2021/37)**

(54) **PROCESS FOR THE PRODUCTION OF SPONGE IRON**

VERFAHREN ZUR HERSTELLUNG VON EISENSCHWAMM

PROCÉDÉ DE PRODUCTION D'UNE ÉPONGE DE FER

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **10.03.2020 SE 2030072**

(43) Date of publication of application:
**18.01.2023 Bulletin 2023/03**

(73) Proprietor: **HYBRIT Development AB**
**111 64 Stockholm (SE)**

(72) Inventors:
• **GRÖNKVIST, Stefan**
**187 41 Täby (SE)**

• **ANDERSSON, Joakim**
**114 23 Stockholm (SE)**

(74) Representative: **Zacco Sweden AB**
**P.O. Box 5581**
**Löjtnantsgatan 21**
**114 85 Stockholm (SE)**

(56) References cited:
**CN-A- 106 521 074        CN-A- 109 477 686**
**DE-A1- 102018 202 594    US-A1- 2016 319 383**
**US-A1- 2018 155 191**

(52) Cooperative Patent Classification (CPC): (Cont.)
    Y02P 10/134; Y02P 10/20; Y02P 10/25

**Description**

TECHNICAL FIELD

The present disclosure relates to a process for the production of sponge iron. The disclosure further relates to a system for the production of sponge iron.

BACKGROUND ART

Steel is the world's most important engineering and construction material. It is difficult to find any object in the modern world that does not contain steel, or depend on steel for its manufacture and/or transport. In this manner, steel is intricately involved in almost every aspect of our modern lives.

In 2018, the total global production of crude steel was 1 810 million tonnes, by far exceeding any other metal, and is expected to reach 2800 million tonnes in 2050 of which 50% is expected to originate from virgin iron ore. Steel is also the world's most recycled material with a very high recycling grade due to its ability to be used over and over again after remelting, using electricity as the energy input.

Thus, steel is a cornerstone of modern society with an even more significant role to play in the future.

Steel is mainly produced via three routes:

i) Integrated production using virgin iron ore in a blast furnace (BF), where iron oxide in the ore is reduced by carbon to produce iron. The iron is further processed in the steel plant by oxygen blowing in a basic oxygen furnace (BOF), followed by refining to produce steel. This process is commonly also referred to as 'oxygen steelmaking'.

ii) Scrap-based production using recycled steel, which is melted in an electric arc furnace (EAF) using electricity as the energy input. This process is commonly also referred to as 'electric steelmaking'.

iii) Direct reduction production based on virgin iron ore, which is reduced in a direct reduction (DR) process with a carbonaceous reducing gas to produce sponge iron. The sponge iron is subsequently melted, typically together with scrap, in an EAF to produce steel.

Although these processes have been refined over extended periods of time and are approaching the theoretical minimum energy use, there is one fundamental issue not yet resolved: reduction of iron ore using carbonaceous reductants results in the production of $CO_2$ as a by-product. For every ton steel produced in 2018, an average of 1.83 tonnes of $CO_2$ were produced. The steel industry is one of the most $CO_2$-emitting industries, accounting for approximately 7% of CO2 emissions globally. Excessive $CO_2$-generation cannot be avoided within the steel production process as long as carbonaceous reductants are used.

The HYBRIT initiative has been founded to address this issue. HYBRIT - short for HYdrogen BReakthrough Ironmaking Technology - is a joint venture between SSAB, LKAB and Vattenfall, funded in part by the Swedish Energy Agency, and aims to reduce $CO_2$ emissions and decarbonize the steel industry.

Central to the HYBRIT concept is a direct reduction-based production of sponge iron from virgin ore. However, instead of using carbonaceous reductant gases, such as natural gas, as in present commercial direct reduction processes, HYBRIT proposes using hydrogen gas as the reductant, termed hydrogen direct reduction (H-DR). The hydrogen gas may be produced by electrolysis of water using mainly fossil-free and/or renewable primary energy sources, as is the case for e.g. Swedish electricity production. Thus, the critical step of reducing the iron ore may be achieved without requiring fossil fuel as an input, and with water as a by-product instead of $CO_2$.

As electrolysis is an inherently electricity-intensive process, the large-scale implementation of H-DR will affect energy systems significantly. For example, full-scale implementation of the H-DR process in Sweden may require as much as 10% of the current Swedish electricity production. The cost of the electricity used will be an important determinant of the final price of the steel produced, and the increased electricity demand associated with H-DR implementation risks driving up electricity prices. A key factor in ensuring the cost of steel from the H-DR process is competitive will therefore be to manage electricity demand. A suitably dimensioned hydrogen storage facility would permit the discontinuous production of hydrogen while maintaining constant steel production. This decoupling of hydrogen production and steel production allows for the hydrogen to be produced during times when the supply of energy is relatively abundant and cheap, thus reducing the cost of steel production and reducing the strain on the electricity grid.

Large-scale storage of hydrogen has to date been based upon the availability of suitable geological conditions for the gas storage, such as salt caverns. The use of aquifers or depleted natural gas fields has also been suggested. Locations lacking such geological conditions must resort to alternative means of hydrogen storage. HYBRIT is for example currently building a pilot hydrogen storage facility based upon lined rock cavern technology. This technology is however relatively costly and is as yet unproven for the storage of hydrogen.

Further proposed routes for the storage of hydrogen is to convert it into a more easily storable substance, such as a metal hydride, methanol, ammonia or formic acid. This allows high hydrogen storage densities using simpler storage facilities, but requires additional steps for the conversion and subsequent release of hydrogen.

A method for the reduction of iron oxide using methanol as an energy carrier is described in document DE 10 2011 112 093 A1. According to this method, synthesis gas is provided, for example, by the gasification of coal and/or biomass. A water-gas shift reaction is used to convert CO in the synthesis gas to $CO_2$. The ratio of $H_2$ to $CO_2$ is adjusted to 3:1 by addition of further hydrogen gas. Methanol is then produced using this gas blend. During reduction of the iron oxide, the methanol is converted by decomposition into carbon monoxide and hydrogen. This mixture of carbon monoxide and hydrogen is introduced into the iron oxide reduction process as a reducing gas. Document CN 109 477 686 A discloses a group of installations for manufacturing mineral construction materials. The group of installations may comprise a steel mill/smelter and a chemical plant for the production of methanol.

There remains a need for improved means of producing sponge iron from renewable sources.

## SUMMARY OF THE INVENTION

The inventors of the present invention, which is further described in appended claims 1-15, have identified a number of shortcomings with prior art means of decoupling the production of reducing gas from the iron ore reduction process. A shortcoming of the use of hydrogen gas is that storage of the hydrogen gas requires either suitable geological conditions or the construction of costly and as yet unproven storage facilities. Alternatives to the use of hydrogen, such as proposed means of using methanol as an energy carrier in the reduction process, have the shortcoming that they are dependent on a source of syngas requiring either fossil fuels or large inputs of biomass. Yet another shortcoming of such alternatives is that they base conversion of the methanol to a reducing gas upon a highly endothermic decomposition reaction to provide carbon monoxide and hydrogen. Such an endothermic decomposition reaction makes the reformation step energy-intensive to perform and complicates process design. Moreover, replenishing the reducing gas (so-called "make-up") utilizing such a reformation reaction would inevitably lead to an accumulation of carbon in the process unless the carbon is removed. Thus, such a process will inevitably lead to carbon emissions or require capture and storage of the $CO_2$ from the top gas. Furthermore, performing the endothermic decomposition in the absence of water may lead to excessive formation of byproducts such as methyl formate, methane and dimethyl ether, and requires a large heat input.

It would be advantageous to achieve a means of overcoming, or at least alleviating, at least some of the above-mentioned shortcomings. In particular, it would be desirable to provide a means of producing a sponge iron that is widely applicable, does not require the use of fossil fuels, may be performed with relatively low $CO_2$ emissions, and is relatively cost- and energy-efficient. To better address one or more of these concerns, a process for the production of sponge iron having the features defined in the appended independent claims is provided.

The process comprises the following steps, as disclosed in appended claim 1. Electrolytic hydrogen and oxygen are produced by electrolysis of water. Methanol is produced by reacting at least a proportion of the electrolytic hydrogen with carbon dioxide. The methanol is then stored. When required, the methanol is reformed by steam reforming and/or partial oxidation using water and/or oxygen to provide carbon dioxide and released hydrogen. The released hydrogen is then provided as a component portion of a reducing gas to a direct reduction shaft. Iron ore in the direct reduction shaft is reduced by the reducing gas to produce the sponge iron.

The process utilizes methanol production as a means to reversibly store hydrogen produced by electrolysis. Methanol is an easy to handle liquid that may be stored in a relatively cheap and easily implementable manner. Thus, the production of hydrogen for the reducing gas may be decoupled from its use in reduction, allowing for the cost of production to be optimized. When the cost of electricity is cheap and/or there is abundant supply of electricity, a proportion of the electrolytic hydrogen may be used directly as reducing gas and excess electrolytic hydrogen may be stored by conversion to methanol. When the stored hydrogen is required for use as a reducing gas, for example when the cost of electricity is high and/or when there is insufficient supply of electricity, the methanol may be reformed to release hydrogen. The reformation step utilizes steam reforming and/or partial oxidation to provide a gas comprising mainly carbon dioxide and hydrogen. Such a reforming step may be performed under conditions that are heat-neutral, or at least significantly less endothermic than methanol decomposition to CO and $H_2$, and the reforming step may even be performed exothermically, depending on the degree of partial oxidation used. This simplifies process design since it significantly reduces the heat demand of the reforming step. Moreover, since the carbon dioxide produced in the reformation step may be used as an input in the methanol synthesis, it is possible to perform the process in a carbon-neutral manner. If for any reason it is desirable to add additional carbon to the process, the amounts required are sufficiently low such that exclusively biomass may be used to meet the demand. Thus, the process may be net $CO_2$ neutral even if additional carbon is required.

A proportion of the electrolytic hydrogen may be used directly as a proportion of the reducing gas. Thus, the reducing gas can be varied dynamically between electrolytic hydrogen and released hydrogen as appropriate, whilst maintaining a constant overall supply of hydrogen to the reduction shaft.

The process may further comprise steps of producing syngas and oxygen by co-electrolysis of water and carbon dioxide; and providing the syngas as a component portion of the reducing gas. Thus, it is envisaged that two separate electrolysis reactions may be utilized: water electrolysis to provide hydrogen and oxygen, and co-electrolysis of water and $CO_2$ to provide hydrogen, carbon monoxide, and oxygen. This allows for the provision of a carbon-containing reducing gas to the direct reduction shaft. A carbon-containing reducing gas may be advantageous for a number of reasons. The overall energy requirements of steel production may be decreased by using a carbon-containing reducing gas. This may be due in part to the incorporation of carbon in the sponge iron product, which reduces the energy requirements in a subsequent electric arc furnace processing step. Another reason for the reduced energy requirement may be a reduced heating requirement for the direct reduction shaft, since the reduction of iron ore with carbon monoxide is exothermic whereas reduction with hydrogen is endothermic. A further advantage of obtaining a carbon-containing sponge iron is that subsequent EAF processing praxis is typically based upon having a carbon-containing iron feed. Evolution of $CO_2$ in the EAF provides a foamy slag that thermally insulates the iron melt and assists in purging gaseous impurities such as nitrogen from the melt. Therefore, a carbon-containing sponge iron may be more widely acceptable to steel producers.

The steps of co-electrolysis and reduction of iron ore may be performed at a steady state. The steps of water electrolysis, methanol production and methanol reformation may be performed dynamically. Thus, it is envisaged that the reduction reaction and the steps of the process required for providing carbon monoxide-containing reducing gas are performed at a more-or-less constant load, and the remaining proportion of hydrogen gas for the reducing gas may be obtained either directly from water electrolysis or from reformation of methanol, depending on what source is currently optimal. This means that during times of high electricity cost and/or low renewable electricity supply, hydrogen may be provided by reformation of methanol. During times of low electricity cost and/or abundant renewable electricity supply, hydrogen may be sourced directly from electrolysis. During these times of low electricity cost and/or abundant renewable electricity supply, an excess of hydrogen may be produced from electrolysis in order to provide hydrogen for conversion to methanol and storage. This allows the process to be performed at lower cost and/or with a higher grade of renewable utilization.

The process may further comprise a step of preheating the reducing gas by heat exchange with a top gas from the direct reduction shaft. This simultaneously heats the reducing gas, lessening the additional energy required to bring the gas to the required temperature, and cools the top gas, allowing condensation and removal of the water in the top gas. The step therefore further increases the energy efficiency of the overall process.

The process may further comprise a step of preheating the reducing gas by passing through an oxy-fuel preheater, wherein the oxy-fuel preheater is heated by the combustion of biomass in oxygen, preferably the oxygen from the co-electrolysis step. Such a step allows for the heating of the reduction gas whilst providing a suitably pure source of fossil-free $CO_2$ for methanol production and/or co-electrolysis. A pure oxygen stream is produced as a by-product of electrolysis. Access to this ready supply of oxygen makes the oxy-fuel preheating economically viable.

The process may further comprise a step of preheating the reducing gas by passing through an electric preheater. If performed in combination with oxy-fuel preheating as described above, this step is preferably performed after the oxy-fuel preheating. Material constraints may prevent heating of the reducing gas to the desired temperature using the oxy-fuel preheater alone. Electric heating provides a highly efficient and flexible means of heating gases to the high temperatures required.

The process may further comprise a step of separating water and/or carbon dioxide from a top gas of the direct reduction shaft. The remaining top gas may then be recycled as a component portion of the reducing gas. This allows for optimal utilization of the reducing components of the reducing gas while maintaining an appropriate reducing gas composition. The separated carbon dioxide may be used in the synthesis of methanol and/or in the production of syngas by co-electrolysis.

The carbon dioxide used in producing methanol and/or used in co-electrolysis may be carbon dioxide obtained in the step of catalytically reforming the methanol, and/or carbon dioxide obtained from the oxy-fuel preheater, and/or carbon dioxide separated from the top gas of the direct reduction shaft. Thus, carbon dioxide obtained and/or produced in the process may be recycled to produce methanol and/or syngas, and there is no need for a separate supply of carbon dioxide.

Methanol may be reformed by endothermic steam reforming, exothermic partial oxidation, or combinations thereof, i.e., oxidative steam reforming. These are well-established means of reforming methanol to provide mixtures of hydrogen and carbon dioxide.

The reducing gas may comprise from about 0 mol% to about 50 mol% carbon monoxide such as from about 10 mol% to about 30 mol%. Since the ratio of hydrogen to carbon monoxide may be independently controlled by the combination of water electrolysis and co-electrolysis, the process offers flexibility in the reducing gas composition. As described herein there are specific advantages associated with the various reducing gas compositions. Pure H-DR (i.e. no carbon monoxide) may provide the lowest minimum electricity load and greatest flexibility in electricity demand, whereas high CO-content may provide the lowest overall electricity demand, as well as the lowest overall energy demand for steel production.

The process may utilize essentially fossil-free electricity, preferably essentially renewable electricity. Thus, the net $CO_2$ emissions of the steelmaking process may be very low or even zero.

According to another aspect of the invention, the objects of the invention are achieved by a system for the production of sponge iron according to the appended independent claims. The system comprises:

- a first electrolyser arranged to produce (electrolytic) hydrogen from the electrolysis of water;

- a methanol production unit arranged to produce methanol from the (electrolytic) hydrogen and carbon dioxide;

- a methanol storage unit, arranged to store the methanol produced by the methanol production unit;

- a methanol reformation unit arranged to reform methanol from the storage unit using water and/or oxygen to provide (released) hydrogen and carbon dioxide; and

- a direct reduction shaft. The direct reduction shaft is arranged to receive released hydrogen and/or electrolytic hydrogen, and optionally syngas if a second electrolyser is utilized.

Such a system allows for a beneficial production of sponge iron as described herein.

The system may further comprise a second electrolyser arranged to produce syngas from the co-electrolysis of water and carbon dioxide.

The system may further comprise a heat exchanger arranged to exchange heat between a top gas of the direct reduction shaft and a reducing gas.

The system may further comprise an oxy-fuel preheater arranged to preheat a reducing gas for introduction into the direct reduction shaft.

The first electrolyser may be a low -temperature electrolyser, such as an alkaline electrolyser or a proton exchange membrane electrolyser.

The second electrolyser may be a high-temperature electrolyser, such as a solid oxide electrolyser.

The system may further comprise a pressure swing adsorption unit for the separation of released hydrogen and carbon dioxide.

Further objects, advantages and novel features of the present invention will become apparent to one skilled in the art from the following detailed description.

BRIEF DESCRIPTION OF THE DRAWINGS

For a fuller understanding of the present invention and further objects and advantages of it, the detailed description set out below should be read together with the accompanying drawings, in which the same reference notations denote similar items in the various diagrams, and in which:

Fig. 1    schematically illustrates the value-chain for a prior art steelmaking process according to the Hybrit concept;

Fig. 2a    schematically illustrates an exemplifying embodiment of a system for the production of sponge iron;

Fig. 2b    schematically illustrates another exemplifying embodiment of a system for the production of sponge iron;

Fig. 2c    schematically illustrates a further exemplifying embodiment of a system for the production of sponge iron;

Fig. 3    is a flow chart schematically illustrating an exemplifying embodiment of a process for the production of sponge iron;

Fig. 4    schematically illustrates the maximum potential low temperature electrolyser overcapacity as a function of mol% CO in the reducing gas and wt% carbon in the sponge iron product; and

Fig. 5    schematically illustrates the energy balances for a range of reducing gas compositions for a sponge iron containing 1 wt% carbon (with the exception of H-DR, which gives a carbon-free sponge iron).

DETAILED DESCRIPTION

The system for producing sponge iron according to the present invention comprises at least a first electrolyser, a methanol production unit, a methanol storage unit, a methanol reformation unit and a direct reduction shaft. The first electrolyser is arranged in fluid connection with the methanol production unit. The methanol production unit is arranged in fluid connection with the methanol storage unit. The methanol storage unit is arranged in fluid connection with the methanol reformation unit. The methanol reformation unit is arranged in fluid connection with the direct reduction shaft.

**Water electrolysis**

The first electrolyser is arranged to produce hydrogen from the electrolysis of water, and may be any electrolyser known in the art and capable of performing such a reaction. Although the first electrolyser is referred to herein in singular, the quantities of hydrogen demanded by the present process will most likely necessitate a plurality of electrolyser units suitably arranged, e.g. arranged in parallel. The first electrolyser may be a low-temperature electrolyser, i.e. operating on liquid water, such as an alkaline electrolyser (AEL) or a proton exchange membrane electrolyser (PEMEL). AEL is at present the more established technology, but PEMEL may operate at higher current densities and may have better response times to variable loads. Alternatively, or in addition, the first electrolyser may comprise a high-temperature (steam) electrolyser, such as a solid oxide electrolyser (SOEL). SOEL may be more efficient than low-temperature technologies, particularly if a ready source of steam or heat is available.

**Methanol production**

The methanol production unit is arranged to produce methanol from carbon dioxide and the electrolytic hydrogen from the first electrolysis unit. Methanol production proceeds according to the following reaction:

$$CO_2 + 3\ H_2 \rightarrow CH_3OH + H_2O$$

$$\Delta H_R = -\ 49\ \text{kJ/mol} \qquad (1)$$

The methanol production unit typically utilizes one or more catalysts to catalyse the formation of methanol. For example, $Cu/ZnO/Al_2O_3$ catalysts are known to catalyst this reaction. Feed and recycle compressors may be used to provide a flow of reactants over the reactor bed(s). A distillation section, comprising one or more distillation columns, is typically arranged for separating the methanol and water products. As the reaction is exothermic, it may be desirable to cool the reactor beds using for example heat exchangers or quench streams in order to achieve suitable conversion per reactor pass. Typical reactor conditions are 210-280 °C at 40-80 bar. Suitable methanol production processes are described in Rikho-Struckmann et al. "Assessment of Methanol Synthesis Utilizing Exhaust CO2 for Chemical Storage of Electrical Energy", Ind. & Eng. Chem. Res., 2010, 49(21), pp. 11073-11078, which is incorporated by reference herein.

**Methanol storage**

The methanol storage unit is arranged to receive and store the methanol produced by the methanol production unit. The methanol storage unit may be any suitable means of storing such quantities of methanol as are applicable in the present invention. Methanol is a flammable liquid having a boiling point of 64.7 °C, and has similar storage requirements as other volatile, flammable liquids such as gasoline. Suitable storage means include in aboveground storage tanks, such as floating roof storage tanks, or in underground storage tanks.

**Methanol reforming**

The methanol reformation unit is arranged to reform the stored methanol to carbon dioxide and hydrogen when required. In order to distinguish the hydrogen produced by this reformation process from hydrogen produced from electrolysis or otherwise participating in the processes described herein, the hydrogen obtained from the methanol reformation step is termed "released hydrogen". The release of $H_2$ from methanol can be achieved via four reactions: endothermic decomposition (MD), exothermic partial oxidation (POX), endothermic steam reforming (SR) and oxidative steam reforming (OSR). However, as discussed below, endothermic decomposition is undesirable and partial oxidation has a number of drawbacks. Therefore, steam reforming and oxidative steam reforming are preferred.

Endothermic decomposition of methanol (MD) produces carbon monoxide and hydrogen by the following re-

action:

$$CH_3OH \rightarrow CO + 2\,H_2$$

$$\Delta H_R = +\,91\ kJ/mol \qquad (2)$$

If endothermic decomposition was to be used as the reforming reaction, this would impede dynamic operation of the electrolyser and reformer. This is because the product gas from endothermic decomposition comprises carbon monoxide as well as hydrogen. If the product gas is used "as is" in dynamic operation, this would lead to unacceptable fluctuation in the composition ($H_2$:CO ratio) of the reducing gas to the direct reduction shaft. Therefore, the remaining alternatives are either to always use a fixed proportion of reformate in the reducing gas, or to remove CO prior to use as reducing gas, neither of which are attractive. Moreover, the high endothermicity of this reaction would make the reformation step energy-intensive to perform and complicates process design. Furthermore, replenishing the reducing gas utilizing such a reformation reaction would inevitably lead to an accumulation of carbon in the process unless the carbon is removed. Thus, such a process will inevitably lead to carbon emissions or require capture and storage of the $CO_2$ produced. Finally, performing the endothermic decomposition in the absence of water may lead to excessive formation of byproducts such as methyl formate, methane and dimethyl ether. For at least these reasons, reforming methanol by endothermic decomposition is not favoured.

Partial oxidation of methanol (POX) proceeds by the following reaction:

$$CH_3OH + \tfrac{1}{2}\,O_2 \rightarrow CO_2 + 2\,H_2$$

$$\Delta H_R = -\,192\ kJ/mol \qquad (3)$$

Partial oxidation suffers from the dual problems of low $H_2$ yield and intermittent production of large amounts of heat, and therefore is not a preferred method of methanol reformation. However, continuous POX of small amounts of methanol could be attractive in order to raise the gas temperature prior to introduction into the reducing shaft, particularly if the reducing gas introduced to the direct reduction shaft is intended to comprise carbon-containing gas such as carbon monoxide anyway.

Steam reforming of methanol (SR) proceeds by the following reaction:

$$CH_3OH + H_2O \rightarrow CO_2 + 3\,H_2$$

$$\Delta H_R = +\,49\ kJ/mol \qquad (4)$$

Oxidative steam reforming of methanol (OSR) is a combination of the SR and POX reactions, as illustrated by the following exemplifying stoichiometry:

$$4\,CH_3OH + 3\,H_2O + \tfrac{1}{2}\,O_2 \rightarrow 4\,CO_2 + 11\,H_2$$

$$\Delta H_R \approx 0\ kJ/mol \qquad (5)$$

For both SR and OSR, evaporation of the methanol and water feeds constitute the greater part of the heat demand for the process, and it is therefore highly advantageous if the feeds can be delivered in gaseous form to the reformer, using for example "waste" heat from other steps of the process. SR and OSR each have specific advantages when integrated into a methanol-based direct reduction process. OSR is heat-neutral for certain feed ratios, and is then termed autothermal reforming. SR demands approximately twice the heat of OSR operated in autothermal mode, but provides a higher yield of Hz. As the hydrogen "lost" by reforming using OSR would be compensated for using hydrogen originally produced from electricity, the choice between SR and OSR will ultimately be decided on by the relative costs of heat and electricity. A further advantage of OSR is that the addition of $O_2$ inside the reactor allows for very efficient heat transfer, allowing fast start-up times and rapid response to changes in reformer load.

Reforming may be performed using for example a $Cu/ZnO/Al_2O_3$ catalyst.

The carbon dioxide present in the reformed gas is preferably removed prior to introduction of the gas as a reducing gas into the direct reduction shaft. Removal of the carbon dioxide may be performed using techniques known in the art, such as pressure swing adsorption or membrane separation techniques.

**Dynamic operation**

The electrolyser, methanol production, storage and reformation are intended to be operated dynamically in order to compensate for variations in the availability and/or cost of electricity. In countries such as Sweden where renewable sources form a substantial share of the electricity supply, there is a significant correlation between abundance of renewable electricity and price, in some cases even resulting in negative electricity prices. This means that during times of abundant low-cost electricity supply, an excess of hydrogen may be produced by electrolysis and converted to methanol for storage. During times when electricity is scarce and/or expensive, the electrolyser may be run at a minimum load and hydrogen may in such a case be provided by the reformation of stored methanol. Due to this dynamic operation, electricity demand is steered to such times when supply is cheap and abundant, thus reducing the cost of the process and ensuring efficient use of transient electricity supplies, as renewable energy sources typically are. The electrolysers and stored methanol may also be used to provide further grid services independent of the production of sponge iron, such as load-levelling.

**Reduction**

The direct reduction shaft reactor may be of any kind commonly known in the art. By shaft reactor, it is meant a solid-gas countercurrent moving bed reactor, whereby a burden of iron ore pellets is introduced at an inlet at the top of the reactor and descends by gravity towards an outlet arranged at the bottom of the reactor. Reducing gas is introduced at a point lower than the inlet of the reactor and flows upwards counter to the moving bed of pellets ore in order to reduce the ore to metallized iron. Reduction is typically performed at temperatures of from about 900 °C to about 1100 °C. The temperatures required are typically maintained by pre-heating of the process gases introduced into the reactor, for example using a preheater. Suitable preheaters are described herein. Further heating of the gases may be obtained after leaving the pre-heater and prior to introduction into the reactor by exothermic partial oxidation of the gases with oxygen or air. The reactor may have a cooling and discharge cone arranged at the bottom to allow the sponge iron to cool prior to discharge from the outlet.

The iron ore burden typically consists predominantly of iron ore pellets, although some lump iron ore may also be introduced. The iron ore pellets typically comprise mostly hematite, together with further additives or impurities such as gangue, fluxes and binders. However, the pellets may comprise some other metals and other ores such as magnetite. Iron ore pellets specified for direct reduction processes are commercially available, and such pellets may be used in the present process. Alternatively, the pellets may be specially adapted for a hydrogen-rich reducing gas.

The reducing gas provided to the direct reduction shaft may comprise the released hydrogen from the methanol reformation step as a component part. The reducing gas may also comprise electrolytic hydrogen, that is to say hydrogen gas from the first electrolysis unit. As described below, the reducing gas may further comprise syngas obtained by co-electrolysis of water and carbon dioxide, as well as components of the top gas recycled from the direct reduction shaft. The reducing gas may be predominantly hydrogen gas. However, the reducing gas may comprise amounts of other gases such as steam, carbon monoxide and carbon dioxide, depending on the exact configuration of the system for production of sponge iron.

**Carburization**

Iron produced by present-day commercial blast furnace or direct reduction routes typically comprises significant amounts of carbon (typically up to 5 wt%), due to carbon incorporation during reduction of the iron ore. Besides its use as a reducing agent, carbon plays further important roles in the steelmaking process. Its presence in the crude iron from the BF or DR process, mainly in the form of iron carbide ($Fe_3C$), lowers the melting point of the iron. During subsequent processing of the crude iron in an EAF or BOF, the exothermic dissociation of iron carbide and oxidation of carbon to CO supplies heat to the process. The gas evolution in the EAF due to this CO production provides a foamy slag that assists in thermally insulating the iron melt and helps diminish consumption of the EAF electrodes. For at least these reasons, the presence of carbon in the crude iron may assist in reducing energy consumption during processing to steel. The presence of carbon in the melt may also influence slag-metal reaction kinetics, and assist in purging dissolved gaseous elements from the metal. Moreover, the presence of carbon in direct reduced iron passivizes the sponge iron and enables simpler handling and transport. Finally, since the steel industry has a heritage and established practice with respect to carbon-containing iron, there may simply be a degree of reluctance among some steelmakers to adopt the use of carbon-free iron, regardless of any benefits.

For at least these reasons, it may be desirable to provide a crude sponge iron produced using substantially fossil-free means, but still containing carbon to an extent that it may be used as a drop-in replacement for present-day crude iron.

The presence of carbon monoxide in the reducing gas may provide a carburized product by the following reactions:

$$3 \, Fe + 2 \, CO \rightarrow Fe_3C + CO_2$$

$$\Delta H_R = -148.7 \text{ kJ/mol} \qquad (6)$$

$$3 \, Fe + CO + H_2 \rightarrow Fe_3C + H_2O$$

$$\Delta H_R = -105.0 \text{ kJ/mol} \qquad (7)$$

$$Fe + CO + H_2 \rightarrow Fe(C_{free}) + H_2O$$

$$\Delta H_R = -135.6 \text{ kJ/mol} \qquad (8)$$

The presence of carbon monoxide in the reducing gas could conceivably be achieved by reforming methanol using endothermic decomposition to provide syngas, as described above, and using the resulting syngas as a component part of the reducing gas. However, as described above, the endothermic decomposition of methanol has a number of drawbacks. Moreover, since methanol reformation is intended to be used dynamically in order to compensate for electricity availability and/or price fluctuations, and since endothermic decomposition provides a fixed ratio of $H_2$:CO of 2:1, using endothermic decomposition only would lead to the ratio of $H_2$:CO in the reducing gas being determined by the dynamic operation of the reformer. The sponge iron resulting from such a process would have a variable quantity of incorporated carbon, which is not desirable.

The inventors of the present invention have identified that use of co-electrolysis of carbon dioxide and water, in combination with the process as described above, may be used to provide a carburized sponge iron. The co-electrolysis of carbon dioxide and water provides a product comprising a blend of carbon monoxide and hydrogen, herein termed syngas. Trace amounts of other gases, such as methane, may also be produced. The molar ratio of hydrogen and carbon monoxide can be tailored depending on the requirements of the syngas product. Co-electrolysis may be performed using a high-temperature solid oxide electrolyser (SOEL), which provides a more efficient use of electricity. For comparison, low-temperature electrolysis of water is estimated to require approximately 100 kWh per kmol (kilo-mole) hydrogen gas, whereas high-temperature co-electrolysis using a SOEL is estimated to require approximately 70 kWh per kmol. The reduction of iron oxide by hydrogen or carbon monoxide proceeds as follows:

$$3 \, H_2 + Fe_2O_3(s) \rightarrow 2 \, Fe(s) + 3 \, H_2O$$

$$\Delta H_R = +98.8 \text{ kJ/mol} \qquad (9)$$

$$3 \, CO + Fe_2O_3(s) \rightarrow 2 \, Fe(s) + 3 \, CO_2$$

$$\Delta H_R = -24.8 \text{ kJ/mol} \qquad (10)$$

It can be seen that one mole carbon monoxide can reduce the same amount of iron oxide as one mole of hydrogen, although the reduction with hydrogen is endothermic whereas the reduction with carbon monoxide is exothermic. It should however be noted that having carbon monoxide in the reducing gas necessitates separation of carbon dioxide from the top gas of the reduction shaft in order to prevent accumulation. Such a separation is energy-demanding. Overall however, using syngas from co-electrolysis of carbon dioxide and water is an energy-efficient means of obtaining a reduced and carburized sponge iron product.

The co-electrolysis may be performed at steady state in order to provide a constant supply of all of the carbon monoxide and a fixed proportion of the hydrogen of the reducing gas. The remaining hydrogen required for the reducing gas may be provided by dynamic operation of the water electrolyser and methanol reformer as described above. The reducing gas may thereby have a $H_2$:CO molar ratio of from about 99:1 to about 60:40, such as from about 95:5 to about 70:30, or from about 90:10 to about 80:20.

### Supply of carbon dioxide and preheating

The present invention requires a source of carbon dioxide for operation: both in order to produce methanol, as well as for use in co-electrolysis if co-electrolysis is utilized. Although carbon dioxide introduced into the process may be captured and recycled, there may be some loss of carbon. Moreover, if a carburized sponge iron is to be produced then carbon will be lost by incorporation in the sponge iron. Therefore, there may be a need for a constant introduction of carbon into the process. This could be achieved by utilizing a supply of carbon dioxide from a high-concentration source. However, there is no guarantee that sufficiently large sources of biogenic carbon dioxide are available in sufficient geographic proximity to be utilizable. Using fossil carbon dioxide is not a feasible option if the goal of the process is to produce fossil-free steel. An alternative is to provide carbon and heat to the process by the combustion of biomass. To this end, the reducing gas may be preheated prior to introduction into the direct reduction shaft using oxy-fuel combustion of biomass. The principle of oxy-fuel combustion is simple: the biomass is combusted using essentially pure oxygen as the oxidant. The resulting flue stream consists essentially of carbon dioxide and steam. The steam may be removed by simple condensation, providing an essentially pure source of carbon dioxide. Conventionally, the provision of essentially pure oxygen is an economic impediment to the utilization of oxy-fuel combustion. However, in the present case there is a ready supply of oxygen available at low additional cost from the water electrolysis step, making oxy-fuel preheating of the reduction gas economically feasible. The heat produced by the oxy-fuel preheater may also be used elsewhere in the process, for example in order to generate a steam feed for the high-temperature co-electrolysis step, and/or to regenerate an amine used in a carbon-capture step.

Due to material limitations it may not be possible to fully heat the reducing gas to the desired temperature using oxy-fuel preheating only. Therefore, electric preheating of the reducing gases may be used as a complement or alternative to oxy-fuel preheating. Means for electrically heating process gases are known in the art.

It is conceived that preheating may be performed dynamically between the oxy-fuel preheater and electric preheater in order to ensure that oxy-fuel preheating is used only to the extent that the $CO_2$ required for the process is produced. This may help minimise biomass consumption.

### Carbon capture and storage

As previously noted, the carbon dioxide present in the gas from the methanol reformer may preferably be separated from the released hydrogen. This may be performed using techniques known in the art, such as pressure swing adsorption, amine absorption, or membrane separation techniques. Pressure swing adsorption is preferred.

If carbon monoxide is present in the reducing gas, then it will be necessary to separate carbon dioxide from the top gas of the direct reduction shaft in order to enable recycling of the top gas. Removal of carbon dioxide from the top gas is preferably achieved using techniques known in the art, such as pressure swing adsorption, amine absorption, or membrane separation techniques. Amine absorption is already widely utilized in carbon capture from flue gas and is the preferred technique.

The flue gas of the oxy-fuel preheater, if used, will consist essentially of steam and carbon dioxide. After condensation of the steam an essentially pure carbon dioxide stream will remain. However, if further purification of this carbon dioxide is required, it may be performed using techniques known in the art, such as pressure swing adsorption, amine absorption, or membrane separation techniques.

The various sources of carbon dioxide may be utilized directly in methanol production and/or co-electrolysis, or the carbon dioxide may be stored until such times as it is required. Means of storing carbon dioxide are known in the art.

### Examples

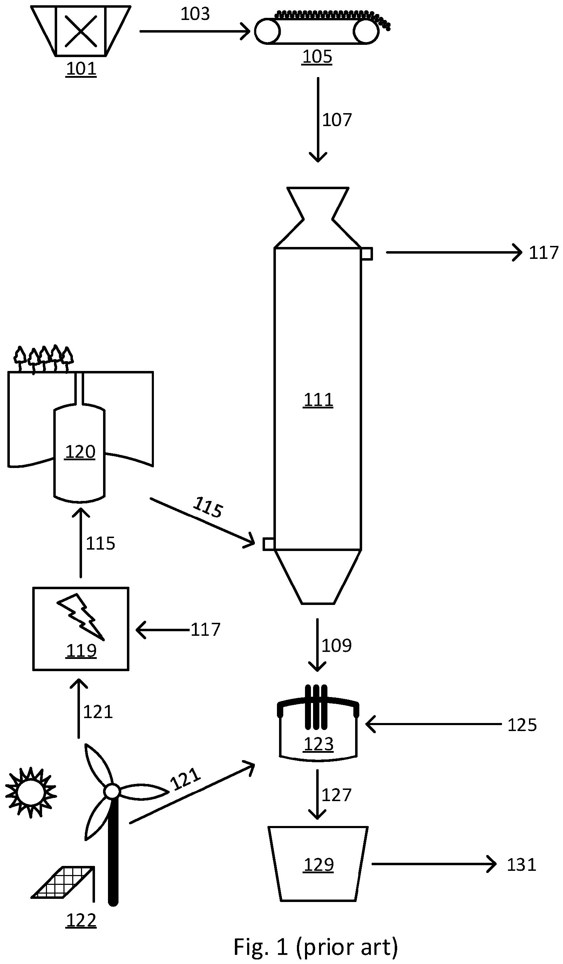

The invention will now be described in more detail with reference to certain exemplifying embodiments and the drawings. However, the invention is not limited to the exemplifying embodiments discussed herein and/or shown in the drawings, but may be varied within the scope of the appended claims. Furthermore, the drawings shall not be considered drawn to scale as some features may be exaggerated in order to more clearly illustrate certain features. Figure 1 schematically illustrates a prior art embodiment of the ore-based steelmaking value chain according to the Hybrit concept. The ore-based steelmaking value chain starts at the iron ore mine 101. After mining, iron ore 103 is concentrated and processed in a pelletizing plant 105, and iron ore pellets 107 are produced. These pellets, together with any lump ore used in the process, are converted to sponge iron 109 by reduction in a direct reduction shaft 111 using hydrogen gas 115 as the main reductant and producing water 117 as the main by-product. The hydrogen gas 115 is produced by electrolysis of water 117 in an electrolyser 119 using electricity 121 that is preferably primarily derived from fossil-free or renewable sources 122. The hydrogen gas 115 may be stored in a hydrogen storage 120 prior to introduction into the direct reduction shaft 111. The sponge iron 109 is melted using an electric arc furnace 123, optionally together with a proportion of scrap iron 125 or other iron source, to provide a melt 127. The melt 127 is subjected to further downstream secondary metallurgical processes 129, and steel 131 is produced. It is intended that the entire value-chain, from ore to steel is fossil-free and produces only low or zero carbon emissions.

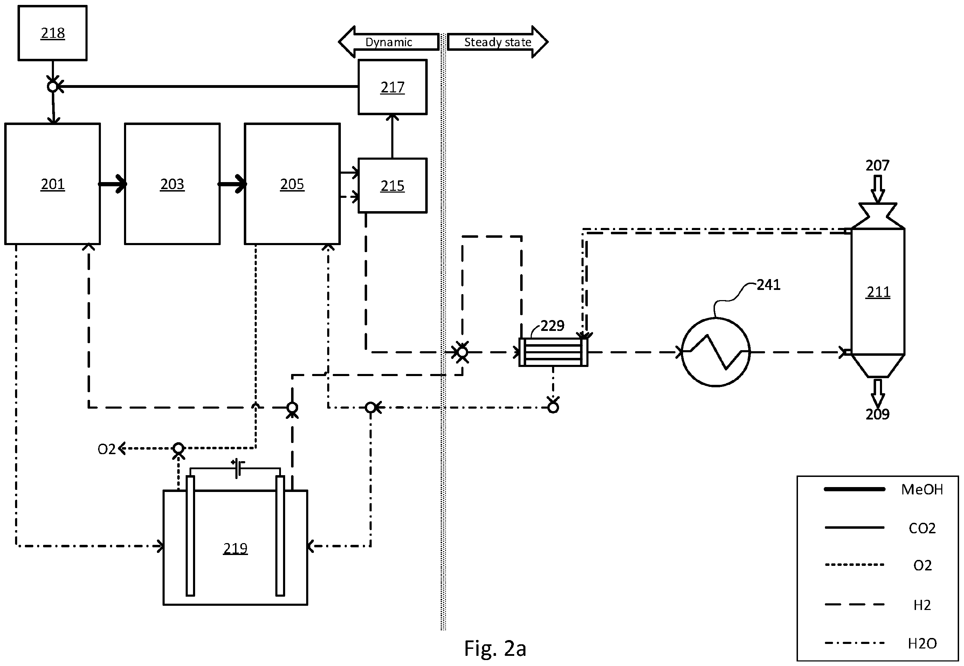

Figure 2a schematically illustrates an exemplifying embodiment of a system for the production of sponge iron according to the present disclosure. The system comprises an electrolysis unit 219 for the electrolysis of water. A proportion of the hydrogen produced by the electrolysis unit 219 is heated by passage through heat exchanger 229 and electric preheater 241 prior to introduction into direct reduction shaft 211 for reduction of iron ore 207 to sponge iron 209. The electrolysis unit 219 is operated dynamically. When electricity is cheap and/or abundant the electrolysis unit 219 may be used to produce an excess of hydrogen. The excess hydrogen may be conveyed to a methanol production unit 201 where it is converted to methanol prior to storage in methanol store 203. When electricity is expensive and/or in scant supply, the electrolysis unit 219 may instead be operated at a minimum load. To compensate for the shortfall of hydrogen produced by electrolysis, methanol from the methanol store 203 may be reformed in the methanol reforming unit 205 to provide hydrogen and carbon dioxide. These gases are separated in PSA unit 215. The carbon dioxide stream may be stored in CO2 store 217 ready for further use in producing methanol. The released hydrogen may be mixed with electrolytic hydrogen and introduced as reducing gas into the direct reduction shaft 211. In this manner, although the electrolysis unit 219, methanol production unit 201, methanol reforming unit 205, and related components may operate dynamically, the total amount of hydrogen supplied to the reducing gas circuit may be relatively constant, allowing steady-state operation of the direct reduction shaft 211 and related components. In the illustrated embodiments, the dynamic components are illustrated to the left of the shaded line and the steady-state components are illustrated to the right.

The top gas obtained from the direct reduction shaft 211 comprises mostly water and hydrogen. The water may be condensed and removed by passage of the top gas through heat exchanger 229, at the same time pre-heating the reducing gas. The water may be reused in the electrolyser 219 and/or in methanol reformation 205. After removal of water, the remaining top gas may be mixed with fresh hydrogen from the dynamic part of the system and introduced as reducing gas into the DR shaft as previously described.

No carbon dioxide is consumed in the process described, since any $CO_2$ used in methanol production is subsequently released when the methanol is reformed to hydrogen and CO2. However, in order to account for loss of carbon in the processes, a $CO_2$ source 218, such as an industrial flue stream, may be used in methanol production.

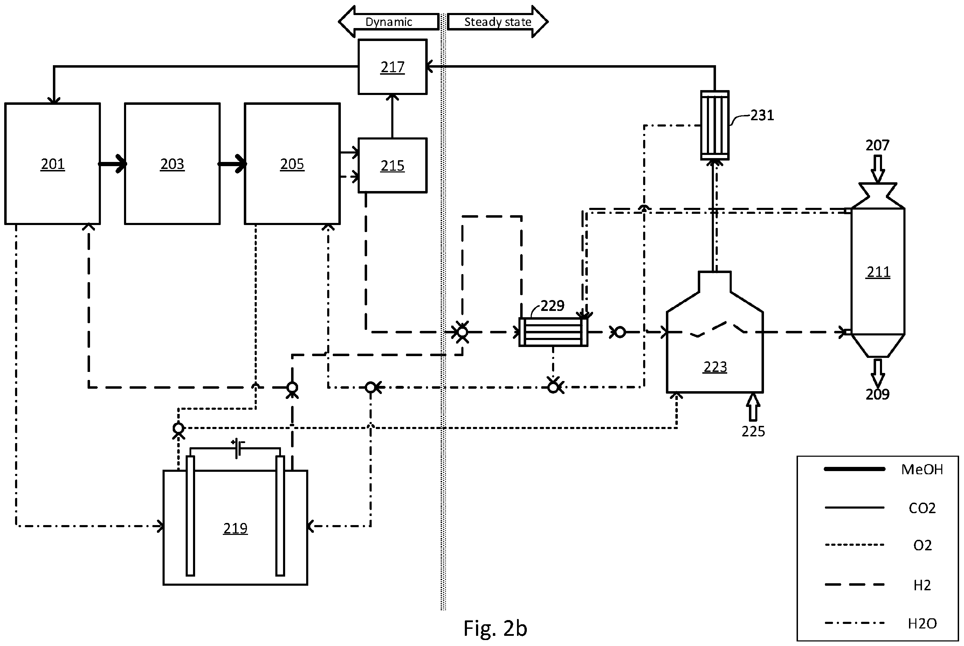

Figure 2b schematically illustrates an exemplifying embodiment of a system comprising an alternative reducing gas pre-heating arrangement. An oxy-fuel preheater 223 is utilized to preheat the reducing gas prior to introduction into the direct reduction shaft 211. The reducing gas is passed through the oxy-fuel preheater 223 where it is heated by heat exchange with the combustion gases of the oxy-fuel preheater 223. The oxy-fuel preheater utilizes biomass 225 as fuel and pure oxygen as oxidant, thus providing a flue gas that consists essentially of water and $CO_2$ only. Oxygen for the oxy-fuel combustion is supplied from the electrolysis unit 219, making the oxy-fuel process economical. Water is condensed from the flue gas in condenser 231 to provide an essentially pure source of $CO_2$ which may be stored for subsequent use in methanol production. Thus, by utilizing an oxy-fuel preheater, the need for an external source of $CO_2$ may be avoided. Although this embodiment is illustrated as lacking an electric preheater 241, such a preheater may be used in combination with an oxy-fuel preheater 223, preferably arranged downstream of the oxy-fuel preheater 223 to further heat gases leaving the oxy-fuel preheater 223.

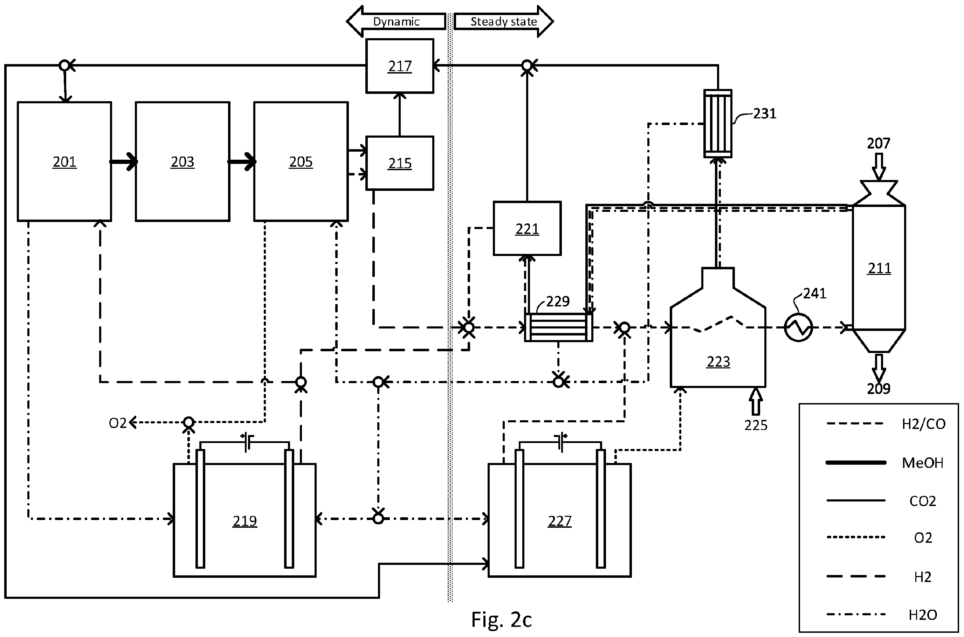

Figure 2c schematically illustrates an exemplifying embodiment of a system utilising both water electrolysis and water/ $CO_2$ co-electrolysis. As with previously described embodiments, this system can be conceptually divided into components operating under steady state, and components operating dynamically. A high-temperature co-electrolysis unit 227, such as a solid oxide electrolysis unit, is used for the co-electrolysis of $CO_2$ and $H_2O$ to produce a mixture of CO and $H_2$. The unit 227 operates under steady state conditions to provide a continuous quantity of syngas having a predetermined $CO:H_2$ ratio to the reducing gas circuit. In the reducing gas circuit, the syngas is mixed with hydrogen gas from the dynamically operated part of the system, as well as reducing gas recycled from the top gas of the reduction shaft 211. This mixed reducing gas is conveyed through the oxy-fuel preheater 223. The reducing gas is further heated by passage through an electric preheater 241 prior to introduction into the direct reduction shaft 211. In the direct reduction shaft, iron ore 207 introduced as burden is conveyed downwards by gravity through the shaft. The iron ore 207 is reduced by the counter-current flow of reducing gas to sponge iron 209. Because the reducing gas in this embodiment comprises CO, the sponge iron 209 will be carburized to the appropriate degree, as determined by e.g. process conditions and the proportion of CO in the reducing gas. Top gas leaving the direct reduction shaft 211 will comprise steam, $CO_2$, $H_2$ and CO. Steam is removed from the top gas by heat exchange in heat exchanger 229, which also serves to preheat a proportion of the reducing gases prior to introduction into the oxy-fuel preheater 223.

Carbon dioxide is removed from the top gas by passage through amine absorption unit 221, leaving a recycled top gas comprising essentially only CO and $H_2$ and suitable for recycling to the reducing gas circuit.

The oxy-fuel preheater operates as described in conjunction with previous embodiments. Note that although the illustrated embodiment utilizes an oxy-fuel preheater 223 in combination with an electric preheater 241, an electric preheater 223 may not be necessary or desirable. The dynamic part of the system comprising inter alia the low-temperature water electrolysis unit 219, methanol production unit 201, methanol reforming unit 205, and related components, provides a relatively fixed proportion of hydrogen gas to the reducing gas circuit, as described in conjunction with previous embodiments.

In all illustrated embodiments a $CO_2$ store 217 is provided. However, such a store is not strictly necessary, and the system may be free of such a store, meaning a carbon storage process step is also not required. This is because a $CO_2$ source, either an extrinsic source 218 or the oxy-fuel preheater 223 may be used provide an excess of $CO_2$ in the system at all times. Note however that if the reducing gas comprises carbon monoxide, separation of $CO_2$ from the top gas will always be required in order to prevent accumulation of $CO_2$ in the reducing gas, even if the separated $CO_2$ is not subsequently stored.

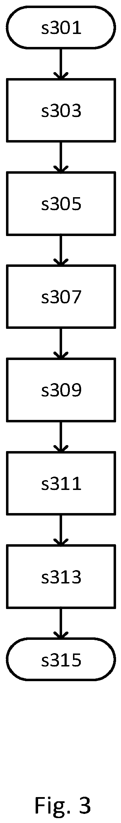

Figure 3 is a flow chart schematically illustrating a process for the production of sponge iron according to an exemplifying embodiment of the present disclosure. Step s301 denotes the start of the process. In step s303 electrolytic hydrogen and oxygen are produced by electrolysis of water. In step s305 methanol is produced by reacting the electrolytic hydrogen with carbon dioxide. In step s307 the methanol is stored. In step s309 the methanol is reformed using water and/or oxygen to provide carbon dioxide and released hydrogen. In step s311 the released hydrogen is provided as a component portion of a reducing gas to a direct reduction shaft. In step s313 iron ore is reduced in the direct reduction shaft using the reducing gas to produce the sponge iron. Step s315 denotes the end of the process.

**Mass and Energy Balances**

*Method*

The basic mass and energy balances of the suggested methanol-based direct reduction process as illustrated in Figure 2c were modelled in order to evaluate its feasibility and performance. Water electrolysis unit 219 is taken to use alkaline electrolysis and co-electrolysis unit 227 is taken to be a high-temperature solid oxide electrolysis unit. The calculations are performed on the basis of a process spanning both the direct reduction process and the subsequent electric arc furnace processing step, as the composition of the sponge iron output by the direct reduction significantly and directly impacts the energy requirements of the EAF step. Calculations were performed on reducing gas compositions ranging from pure hydrogen (i.e. no high-temperature coelectrolysis) to 70:30 molar ratio of hydrogen to carbon monoxide.

The reducing gas is assumed to always contain 5% $CO_2$ and 5% of $H_2O$ (by mole) due to their incomplete separation from the top gas, at least for cases where the reducing gas is a mixture of hydrogen and carbon monoxide. To maintain the same gas flow in the pure hydrogen direct reduction case as in all other cases it is assumed that the reducing gas in this case contains 90% $H_2$ and 10% $H_2O$ (by mole).

Iron ore pellets are taken to consist of $Fe_2O_3$ and 5% (by weight) of inert material. It was assumed that a DRI metallisation of 94% is achieved in all cases and that all remaining iron oxide is in the form of FeO. The production of steel is assumed to be 2 Mt per year with the plant in operation for 360 days per year in all considered cases.

As the degree of carburization that is achieved under different process conditions is uncertain, this is considered a variable in the calculations, with four cases of carburization (by weight): 0.0% (equivalent to H-DR when the concentration of CO in the reducing gas is zero), 0.5%, 1.0%, and 1.5%.

The electric arc furnace is assumed to be fed by hot DRI, resulting in an electricity demand that varies linearly with the DRI carburization between 760 kWh/t steel for carbon-free DRI and 520 kWh/t steel for DRI with a carburization of 2% (by weight).

*Mass balances*

An important aspect of the suggested $CH_3OH$-based direct reduction process is the carbon mass balance: the amount of $CO_2$ delivered by the oxy-fuel combustion process and separated out from the top gas must be sufficient for the operation of the high-temperature electrolyser, assuming, as in the present calculations, that no extrinsic source of $CO_2$ is utilized. This condition was found to be fulfilled for all considered reducing gas compositions. It was found that $CO_2$ storage is not a necessary part of the direct reduction process utilizing oxy-fuel combustion as there is always an

excess of $CO_2$ in the system, even considering a typical oxy-fuel $CO_2$ capture efficiency of 90%.

The excess of $CO_2$ produced by oxy-fuel combustion and separated out from the top gas can be used to produce $CH_3OH$ and store $H_2$. Using the calculated excess of $CO_2$, it is estimated that for pure H-DR, the maximum relative overcapacity of low-temperature electrolysers is calculated to be 41%, increasing to 267% for the case of 30% (by mole) CO in the reducing gas and 1.5% (by weight) of carbon in produced DRI. These low-temperature electrolyser overcapacities would allow for maximum $CH_3OH$ production rates of between 611 and 938 t/d (116 to 177 t $H_2$/d).

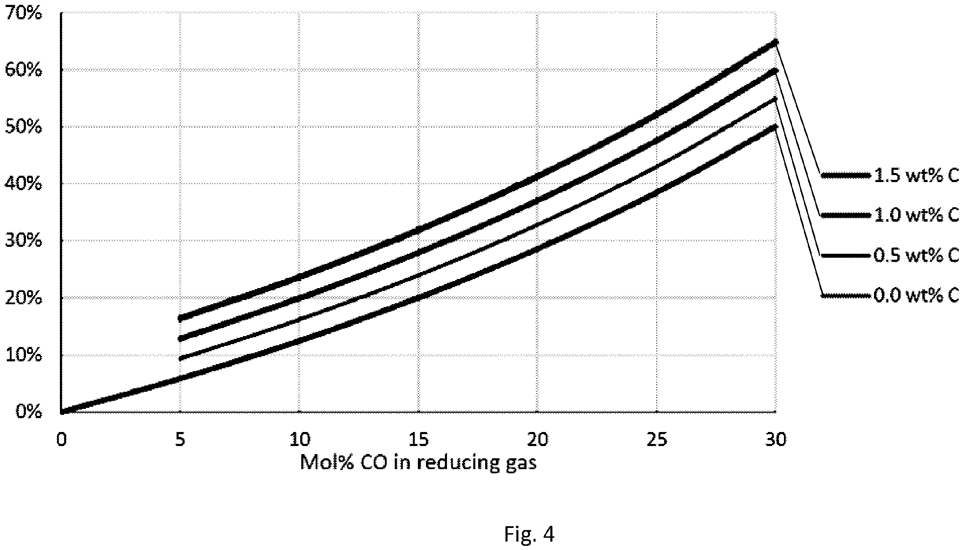

As the high-temperature electrolyser is delivering a mixture of CO and $H_2$ (in a 1:1 molar ratio) and not pure CO, a greater amount of CO in the reducing gas will result in a smaller share of the total $H_2$ being derived from the dynamic section of the process, i.e., the low-temperature electrolyser or $CH_3OH$ reformer. This is shown in Figure 4, illustrating the share of total hydrogen delivered from the high-temperature electrolyser, as a function of mol% CO in the reducing gas and degree of carburization.

As can be seen, the share of the total $H_2$ that is delivered from the high-temperature electrolyser increases rather rapidly with increasing reducing gas CO concentration. This means that as the proportion of CO is increased in the reducing gas, the possibility of dynamic operation of the system is decreased.

### Energy balances

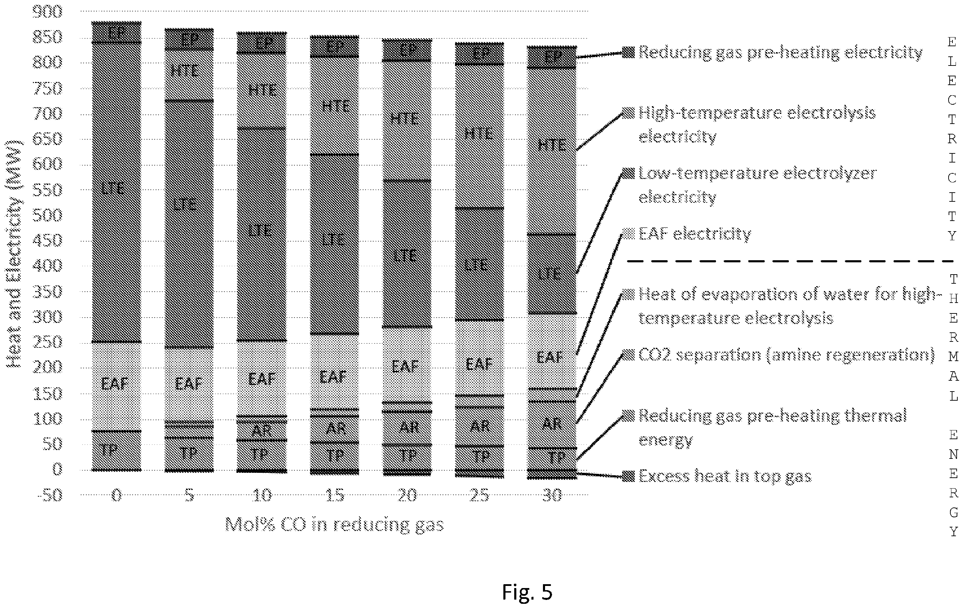

The total calculated energy demand of the process for a range of reducing gas compositions is shown in Figure 5. The carbon content of the DRI is 1 wt% in all cases except H-DR (0 mol% CO) where the carbon content of the DRI is 0 wt%. It is seen that the overall energy demand of the process decreases somewhat with increasing reducing gas CO concentration. It can be seen that the decrease in electricity demand is even greater, with a much more significant proportion of the energy demand being thermal energy in processes utilizing a CO-containing reducing gas. Therefore, the operational costs of utilizing CO-containing reducing gas may be even more favourable assuming that the cost of biomass is low relative to the electricity price, as is typically the case.

Another conclusion that can be drawn from Figure 5 is that the total electricity demand of the steady state part of the direct reduction process, i.e., the high-temperature electrolyser, the EAF, and the electric pre-heating, increases with increasing reducing gas CO concentration. The result of this increase is that the minimum electricity demand of the process increases, thus deceasing the possibility of dynamic operation of the system. This increased minimum load may be disadvantageous during extended periods of high electricity prices. However, it should be noted that the increase in allowable low-temperature electrolyser overcapacity also increases, although not quite as rapidly, when increasing the reducing gas CO concentration. Therefore, the total decrease in electricity demand flexibility of the process (here meaning the difference between the maximum and minimum electricity demand) when going from H-DR to 30% (by mole) CO and 1.5% (by weight) DRI carburization is only around 39% (from 832 MW to 507 MW of variability).

Thus, to summarise the advantages of the various alternatives with regard to each other, a pure H-DR process may provide a greater possibility of dynamic operation as expressed in electricity demand flexibility, but the operational costs of a process utilizing a CO-containing reducing gas may be lower, especially in the case where the energy cost of biomass is low relative to the cost of electricity. A further advantage of the CO-containing reducing gas is that it provides a carburized sponge iron that may be used as a drop-in replacement for sponge irons produced by prior art fossil-based processes in subsequent EAF and secondary metallurgical processes. proportion of the energy demand being thermal energy in processes utilizing a CO-containing reducing gas. Therefore, the operational costs of utilizing CO-containing reducing gas may be even more favourable assuming that the cost of biomass is low relative to the electricity price, as is typically the case.

Another conclusion that can be drawn from Figure 5 is that the total electricity demand of the steady state part of the direct reduction process, i.e., the high-temperature electrolyser, the EAF, and the electric pre-heating, increases with increasing reducing gas CO concentration. The result of this increase is that the minimum electricity demand of the process increases, thus deceasing the possibility of dynamic operation of the system. This increased minimum load may be disadvantageous during extended periods of high electricity prices. However, it should be noted that the increase in allowable low-temperature electrolyser overcapacity also increases, although not quite as rapidly, when increasing the reducing gas CO concentration. Therefore, the total decrease in electricity demand flexibility of the process (here meaning the difference between the maximum and minimum electricity demand) when going from H-DR to 30% (by mole) CO and 1.5% (by weight) DRI carburization is only around 39% (from 832 MW to 507 MW of variability).

Thus, to summarise the advantages of the various alternatives with regard to each other, a pure H-DR process may provide a greater possibility of dynamic operation as expressed in electricity demand flexibility, but the operational costs of a process utilizing a CO-containing reducing gas may be lower, especially in the case where the energy cost of biomass is low relative to the cost of electricity. A further advantage of the CO-containing reducing gas is that it provides a carburized sponge iron that may be used as a drop-in replacement for sponge irons produced by prior art fossil-based processes in subsequent EAF and secondary metallurgical processes.

**Claims**

1. A process for the production of sponge iron, the process comprising the steps:

   - producing electrolytic hydrogen and oxygen by electrolysis of water (s303);
   - producing methanol by reacting the electrolytic hydrogen with carbon dioxide (s305);
   - storing the methanol (s307);
   - reforming the methanol by steam reforming and/or partial oxidation using water and/or oxygen to provide carbon dioxide and released hydrogen (s309);
   - providing the released hydrogen as a component portion of a reducing gas to a direct reduction shaft (s311); and
   - reducing iron ore in the direct reduction shaft using the reducing gas to produce the sponge iron (s313).

2. The process according to claim 1, further comprising the steps:

   - producing syngas and oxygen by co-electrolysis of water and carbon dioxide; and
   - providing the syngas as a component portion of the reducing gas.

3. The process according to claim 2, wherein the steps of co-electrolysis and reduction of iron ore are performed at a steady state, and wherein the steps of water electrolysis, methanol production and methanol reformation are performed dynamically.

4. The process according to any one of the preceding claims, further comprising a step:

   - preheating the reducing gas by heat exchange with a top gas from the direct reduction shaft.

5. The process according to any one of the preceding claims, further comprising a step:

   - preheating the reducing gas by passing through an oxy-fuel preheater, wherein the oxy-fuel preheater is heated by the combustion of biomass in oxygen, preferably the oxygen from the co-electrolysis step.

6. The process according to any one of the preceding claims, further comprising a step:

   - preheating the reducing gas by passing through an electric preheater.

7. The process according to any one of the preceding claims, further comprising the steps:

   - separating water and/or carbon dioxide from a top gas of the direct reduction shaft; and
   - recycling the top gas as a component portion of the reducing gas.

8. The process according to any one of the preceding claims, wherein the carbon dioxide used in producing methanol and/or used in co-electrolysis is carbon dioxide obtained in the step of catalytically reforming the methanol, and/or carbon dioxide obtained from the oxy-fuel preheater, and/or carbon dioxide separated from the top gas of the direct reduction shaft.

9. The process according to any one of the preceding claims, wherein the methanol is reformed by endothermic steam reforming, exothermic partial oxidation, oxidative steam reforming, or autothermal reforming.

10. The process according to any one of the preceding claims, wherein the reducing gas comprises from about 0 mol% to about 50 mol% carbon monoxide.

11. The process according to any one of the preceding claims, wherein a proportion of the electrolytic hydrogen is used directly as a proportion of the reducing gas.

12. The process according to any one of the preceding claims, wherein the process utilizes fossil-free electricity, preferably renewable electricity.

13. A system for the production of sponge iron, the system comprising:

- a first electrolyser (219) arranged to produce hydrogen from the electrolysis of water;
- a methanol production unit (201) arranged to produce methanol from hydrogen and carbon dioxide;
- a methanol storage unit;
- a methanol reformation unit arranged to reform methanol using water and/or oxygen by steam reforming and/or partial oxidation to provide hydrogen and carbon dioxide; and
- a direct reduction shaft (111, 211).

14. The system according to claim 13, further comprising a second electrolyser arranged to produce syngas from the co-electrolysis of water and carbon dioxide.

15. The system according to any one of claims 13-14, further comprising an oxy-fuel preheater arranged to preheat a reducing gas for introduction into the direct reduction shaft.

**Patentansprüche**

1. Verfahren zur Herstellung eines Eisenschwamms, wobei das Verfahren die folgenden Schritte umfasst:

   - Herstellen von Elektrolytwasserstoff und Sauerstoff durch Elektrolyse von Wasser (s303);
   - Herstellen von Methanol durch Reagieren des Elektrolytwasserstoffs mit Kohlendioxid (s305);
   - Speichern des Methanols (s307);
   - Reformieren des Methanols durch Dampfreformieren und/oder Teiloxidation unter Verwendung von Wasser und/oder Sauerstoff, um Kohlendioxid und freigesetzten Wasserstoff bereitzustellen (s309);
   - Bereitstellen des freigesetzten Wasserstoffs als einen Komponentengehalt eines Reduziergases zu einem Direktreduktionsschacht (s311); und
   - Reduzieren von Eisenerz in dem Direktreduktionsschacht unter Verwendung des Reduziergases, um den Eisenschwamm herzustellen (s313).

2. Verfahren nach Anspruch 1, ferner umfassend die folgenden Schritte:

   - Herstellen von Synthesegas und Sauerstoff durch Co-Elektrolyse von Wasser und Kohlendioxid; und
   - Bereitstellen des Synthesegases als einen Komponentengehalt des Reduziergases.

3. Verfahren nach Anspruch 2, wobei die Schritte der Co-Elektrolyse und der Reduktion von Eisenerz in einem statischen Zustand durchgeführt werden und wobei die Schritte der Wasserelektrolyse, der Methanolherstellung und der Methanolreformierung dynamisch durchgeführt werden.

4. Verfahren nach einem der vorhergehenden Ansprüche, ferner umfassend einen folgenden Schritt:

   - Vorheizen des Reduziergases durch Wärmeaustausch mit einem Gichtgas aus dem Direktreduktionsschacht.

5. Verfahren nach einem der vorhergehenden Ansprüche, ferner umfassend einen folgenden Schritt:

   - Vorheizen des Reduziergases durch Hindurchführen durch einen Sauerstoff-Brennstoffvorheizer, wobei der Sauerstoff-Brennstoffvorheizer durch die Verbrennung von Biomasse in Sauerstoff, bevorzugt dem Sauerstoff des Co-Elektrolyseschritts, geheizt wird.

6. Verfahren nach einem der vorhergehenden Ansprüche, ferner umfassend einen folgenden Schritt:

   - Vorheizen des Reduziergases durch Hindurchführen durch einen elektrischen Vorheizer.

7. Verfahren nach einem der vorhergehenden Ansprüche, ferner umfassend die folgenden Schritte:

   - Abscheiden von Wasser und/oder Kohlendioxid aus einem Gichtgas des Direktreduktionsschachts; und
   - Wiederverwenden des Gichtgases als einen Komponentengehalt des Reduziergases.

8. Verfahren nach einem der vorhergehenden Ansprüche, wobei das Kohlendioxid, das beim Herstellen von Methanol verwendet wird und/oder bei der Co-Elektrolyse verwendet wird, Kohlendioxid, das in dem Schritt des katalytischen

16

Reformierens des Methanols erlangt wird, und/oder Kohlendioxid, das aus dem Sauerstoff-Brennstoffvorheizer erlangt wird, und/oder Kohlendioxid, das aus dem Gichtgas des Direktreduktionsschachts abgeschieden wird, ist.

9. Verfahren nach einem der vorhergehenden Ansprüche, wobei das Methanol durch endothermes Dampfreformieren, exotherme Teiloxidation, oxidatives Dampfreformieren oder autothermes Reformieren reformiert wird.

10. Verfahren nach einem der vorhergehenden Ansprüche, wobei das Reduziergas von ungefähr 0 Mol-% bis ungefähr 50 Mol-% Kohlendioxid umfasst.

11. Verfahren nach einem der vorhergehenden Ansprüche, wobei ein Anteil des Elektrolytwasserstoffs direkt als ein Anteil des Reduziergases verwendet wird.

12. Verfahren nach einem der vorhergehenden Ansprüche, wobei das Verfahren Elektrizität ohne fossile Brennstoffe, bevorzugt erneuerbare Elektrizität, verwendet.

13. System zur Herstellung eines Eisenschwamms, wobei das System Folgendes umfasst:

- einen ersten Elektrolyseur (219), der dazu angeordnet ist, Wasserstoff aus der Elektrolyse von Wasser herzustellen;
- eine Methanolherstellungseinheit (201), die dazu angeordnet ist, Methanol aus Wasserstoff und Kohlendioxid herzustellen;
- eine Methanolspeichereinheit;
- eine Methanolreformierungseinheit, die dazu angeordnet ist, Methanol unter Verwendung von Wasser und/oder Sauerstoff durch Dampfreformieren und/oder Teiloxidation zu reformieren, um Wasserstoff und Kohlendioxid bereitzustellen; und
- einen Direktreduktionsschacht (111, 211).

14. System nach Anspruch 13, ferner umfassend einen zweiten Elektrolyseur, der dazu angeordnet ist, Synthesegas aus der Co-Elektrolyse von Wasser und Kohlendioxid herzustellen.

15. System nach einem der Ansprüche 13-14, ferner umfassend einen Sauerstoff-Brennstoffvorheizer, der dazu angeordnet ist, ein Reduziergas zur Einführung in den Direktreduktionsschacht vorzuheizen.

**Revendications**

1. Procédé de production d'une éponge de fer, le procédé comprenant les étapes suivantes :

- la production d'hydrogène et d'oxygène électrolytiques par électrolyse de l'eau (s303) ;
- la production de méthanol par réaction de l'hydrogène électrolytique avec du dioxyde de carbone (s305) ;
- le stockage du méthanol (s307) ;
- le reformage du méthanol par reformage à la vapeur et/ou oxydation partielle à l'aide d'eau et/ou d'oxygène pour fournir du dioxyde de carbone et de l'hydrogène libéré (s309) ;
- la fourniture de l'hydrogène libéré en tant que partie constitutive d'un gaz réducteur à un arbre de réduction directe (s311) ; et
- la réduction du minerai de fer dans l'arbre de réduction directe à l'aide du gaz réducteur pour produire l'éponge de fer (s313).

2. Procédé selon la revendication 1, comprenant également les étapes suivantes :

- la production de gaz de synthèse et d'oxygène par coélectrolyse de l'eau et du dioxyde de carbone ; et
- la fourniture du gaz de synthèse comme partie constitutive du gaz réducteur.

3. Procédé selon la revendication 2, dans lequel les étapes de coélectrolyse et de réduction du minerai de fer sont réalisées à un état stable, et dans lequel les étapes d'électrolyse de l'eau, de production de méthanol et de reformage du méthanol sont réalisées de manière dynamique.

4. Procédé selon l'une quelconque des revendications précédentes, comprenant également une étape de :

- préchauffage du gaz réducteur par échange de chaleur avec un gaz supérieur provenant de l'arbre de réduction directe.

5. Procédé selon l'une quelconque des revendications précédentes, comprenant également une étape de :

- préchauffage du gaz réducteur en le faisant passer à travers un préchauffeur oxygaz, dans lequel le préchauffeur oxygaz est chauffé par la combustion de biomasse dans de l'oxygène, de préférence l'oxygène issu de l'étape de coélectrolyse.

6. Procédé selon l'une quelconque des revendications précédentes, comprenant également une étape de :

- préchauffage du gaz réducteur en le faisant passer à travers un préchauffeur électrique.

7. Procédé selon l'une quelconque des revendications précédentes, comprenant également les étapes suivantes :

- la séparation de l'eau et/ou du dioxyde de carbone d'un gaz supérieur de l'arbre de réduction directe ; et
- le recyclage du gaz supérieur comme partie constitutive du gaz réducteur.

8. Procédé selon l'une quelconque des revendications précédentes, dans lequel le dioxyde de carbone utilisé dans la production de méthanol et/ou utilisé dans la coélectrolyse est du dioxyde de carbone obtenu dans l'étape de reformage catalytique du méthanol, et/ou du dioxyde de carbone obtenu à partir du préchauffeur oxygaz, et/ou du dioxyde de carbone séparé du gaz supérieur de l'arbre de réduction directe.

9. Procédé selon l'une quelconque des revendications précédentes, dans lequel le méthanol est reformé par reformage à la vapeur endothermique, oxydation partielle exothermique, reformage à la vapeur oxydante ou reformage autothermique.

10. Procédé selon l'une quelconque des revendications précédentes, dans lequel le gaz réducteur comprend d'environ 0 % en moles à environ 50 % en moles de monoxyde de carbone.

11. Procédé selon l'une quelconque des revendications précédentes, dans lequel une proportion de l'hydrogène électrolytique est utilisée directement comme proportion du gaz réducteur.

12. Procédé selon l'une quelconque des revendications précédentes, dans lequel le procédé utilise de l'électricité sans énergie fossile, de préférence de l'électricité renouvelable.

13. Système de production d'une éponge de fer, le système comprenant :

- un premier électrolyseur (219) agencé pour produire de l'hydrogène à partir de l'électrolyse de l'eau ;
- une unité de production de méthanol (201) agencée pour produire du méthanol à partir d'hydrogène et de dioxyde de carbone ;
- une unité de stockage de méthanol ;
- une unité de reformage de méthanol agencée pour reformer le méthanol à l'aide d'eau et/ou de d'oxygène par reformage à la vapeur et/ou oxydation partielle pour fournir de l'hydrogène et du dioxyde de carbone ; et
- un arbre de réduction directe (111, 211).

14. Système selon la revendication 13, comprenant également un second électrolyseur agencé pour produire du gaz de synthèse à partir de la coélectrolyse de l'eau et du dioxyde de carbone.

15. Système selon l'une quelconque des revendications 13 et 14, comprenant également un préchauffeur oxygaz agencé pour préchauffer un gaz réducteur destiné à être introduit dans l'arbre de réduction directe.

Fig. 1 (prior art)

Fig. 2a

Fig. 2b

Fig. 2c

Steady state

Dynamic

H2/CO
MeOH
CO2
O2
H2
H2O

207
211
209
241
231
225
223
227
229
221
217
215
205
203
201
219
O2

```
        ┌─────────┐
        │  s301   │
        └────┬────┘
             │
             ▼
        ┌─────────┐
        │  s303   │
        └────┬────┘
             │
             ▼
        ┌─────────┐
        │  s305   │
        └────┬────┘
             │
             ▼
        ┌─────────┐
        │  s307   │
        └────┬────┘
             │
             ▼
        ┌─────────┐
        │  s309   │
        └────┬────┘
             │
             ▼
        ┌─────────┐
        │  s311   │
        └────┬────┘
             │
             ▼
        ┌─────────┐
        │  s313   │
        └────┬────┘
             │
             ▼
        ┌─────────┐
        │  s315   │
        └─────────┘
```

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102011112093 A1

- CN 109477686 A

### Non-patent literature cited in the description

- **RIKHO-STRUCKMANN et al.** Assessment of Methanol Synthesis Utilizing Exhaust CO2 for Chemical Storage of Electrical Energy. *Ind. & Eng. Chem. Res,* 2010, vol. 49 (21), 11073-11078